# EUROPEAN PATENT SPECIFICATION

(11) **EP 0 596 841 B1**
(45) Date of publication and mention of the grant of the patent: **29.04.1998**
(21) Application number: 93830431.8
(22) Date of filing: 29.10.1993
(51) Int. Cl.: A01C 11/02

(54) **A row distributor for the transplanting of small plants in soil blocks of compressed peat or synthetic substratum of the Dutch kind**
Reihenabgabevorrichtung für Pflanzung von Pflanzlingen in Erdtöpfen oder synthetisches Substrat
Distributeur en lignes pour la plantation de plantules en mottes de terre au substrate synthétique du genre hollandais

(30) Priority: 03.11.1992 IT MN920030
(43) Date of publication of application: 11.05.1994
(73) Proprietor: FERRARI COSTRUZIONI MECCANICHE DI FERRARI FRANCESCO E DARIO & C. S.N.C., Guidizzolo (Mantova) (IT)
(72) Inventor: Ferrari, Luigi, 46040 Guidizzolo (MN) (IT)
(74) Representative: Mascioli, Alessandro, Prof.Dr.

(56) References cited:
- EP-A- 0 062 917
- EP-A- 0 475 839
- GB-A- 2 114 413

## Description

The present invention concerns a row distributor, which represents the equipment of the transplanting machine and which for the same replaces the intervention of man or other systems, among which the one mentioned in our patent application no. MN91A000034 filed on 17th December 1991 in Mantova (Italy), and with respect to which the object of the present invention seems to be quicker, preciser, with less errors in depositing and with a higher guarantee for the preciseness in the distance, on the row, between one plant and the other.

For a better understanding of the problems arising in this field, it shall be underlined that the soil blocks in which the small plants are grown, are commercially available in small boxes, in which around 100 small plants are housed. Since the realization phase, the small soil blocks are linked one to another at their bottom, and it is therefore the task of an automatic distributor - once the soil blocks are placed onto a belt - to separate them and to place them at a different, desired distance.

Another way to grow seedlings of plants includes the sowing of seedlings in a continuous paper tube pot assembly.

In the patent application GB-A-2 114 413, which corresponds to the preamble of claim 1, is disclosed a transplanting machine in which a continuous chain of paper tube potted seedlings is drawn out in the form of a row by utilizing the rotary force of a rotary transplanting rod assembly which clasps the forwardmost one of the row of paper tube potted seedlings, the separation of the forwardmost potted seedling from the drawn-out potted seedling row being attained in co-operation with a stopper mechanism comprising an appearing/disappearing stopping plate or a right/left opening/closing mechanism, for stopping the drawing out of the succeeding paper tube potted seedlings, and as the transplanting rod assembly further rotates, the separated paper tube potted seedlings being released onto the ground by the rotary transplanting rod assembly and planted therein.

The feeding device of this transplanting machine comprises a seedling table fixed on a frame so as to mount thereon continuous paper tube pot assembly potted seedlings.

A pair of guide plates for guiding the row of continuous paper tube potted seedlings is provided at a central portion of the seedling table of the drawing out portion so as to help in the drawing out of the potted seedlings. At the respective forward end portions of the guide plates are provided a pair of pressing plates for preventing the row of continuous paper tube potted seedlings from spontaneously falling due to the steep incline.

A spring is provided between the pressing plates out of the way of the row so as to urge the pressing plates inwardly or alternatively, each of the pressing plates is made of a plate spring so that it is always inwardly biased.

In a further embodiment a pair of guide wheels are provided at an upper portion of a seedling drawing-out portion. The spacing between the wheels is selected to be wider than the width of a row of potted seedling which has been separated successively from the forwardmost row thereof from a snake-like continuous paper tube assembly potted seedlings on a seedling mount portion of the seedling table.

The circunference of each guide wheel is covered with a cushion material such as sponge, soft gum, felt, or like.

The guide wheels rotate in the direction to advance the potted seedling row by means of a rotating mechanism. Thus, the drawing-out of the potted seedling row is promoted without applying unnecessary resistance against the drawing-out operation.

Following the guide wheels there are provided a pair of pressing plates. One of the plates is fixed on a shaft, and the other plate is fixed to an attaching rod fixed to the seedling drawing-out portion. Thus, the one pressing plate attached to the shaft swings while the other pressing plate attached to the attaching rod is immovable.

The above described transplanting machine however is not usable for transplanting small plants grown in soil blocks without a pot, because the soil blocks are not clasped and drawn out by the rotary transplanting rod assembly.

The device according to the present invention consists of the features disclosed in claim 1.

Preferably, the device comprises an inclined belt for the transport of the soil blocks moved by a front roll for supporting the machine, and at a speed higher than the absorption of the row distributor, so as to have always ready the soil blocks with the small plants, without empty spaces.

The device according to the present invention shows the following advantages:
- it further reduces the transplantation times;
- it allows the use of soil blocks of different mixtures and moisture, without discarding plants or reducing the operativity of the machine;
- it allows the use of standard tractors, without the need of applying expensive super speed-reducers for the change gear;
- it allows quick and short-lasting interventions also onto large plants assuring, particularly in the warmer seasons, a quick watering and an equally quick intervention when the weather worsens;
- it allows the use of plants developped to the sole cotyledons, reducing the time they are staying in a hothouse and the consequent costs;
- it allows a greater uniformity in the distance between one plant and the other.

For making clear the understanding of the object of the present invention, a preferred embodiment of the same will be described hereinbelow, according to the enclosed drawings, in which:
- figure 1: shows a top scheme view of the device according to the present invention;
- figure 2: shows a lateral view of the device according to the present invention;
- figure 3: shows the device according to the present invention as seen from point A of figure 2; and
- figure 4: shows a top view of a rotor.

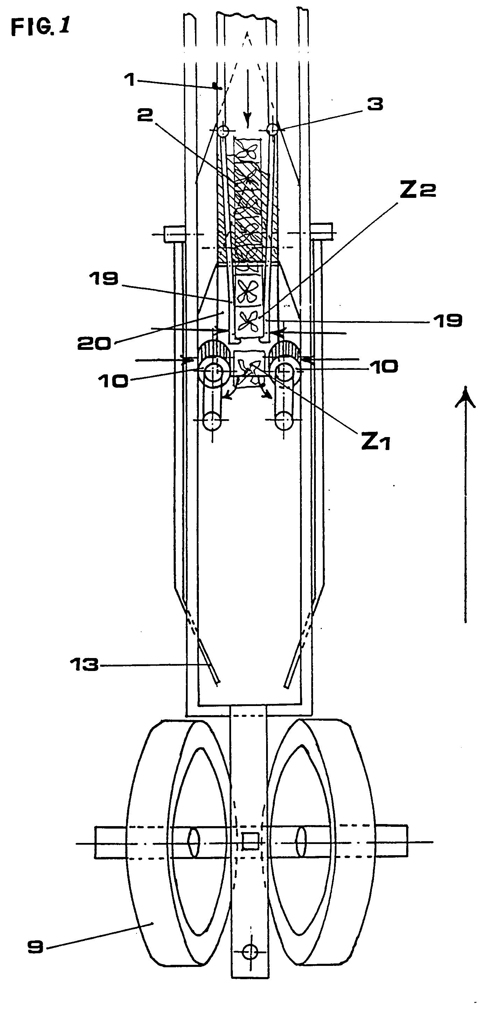

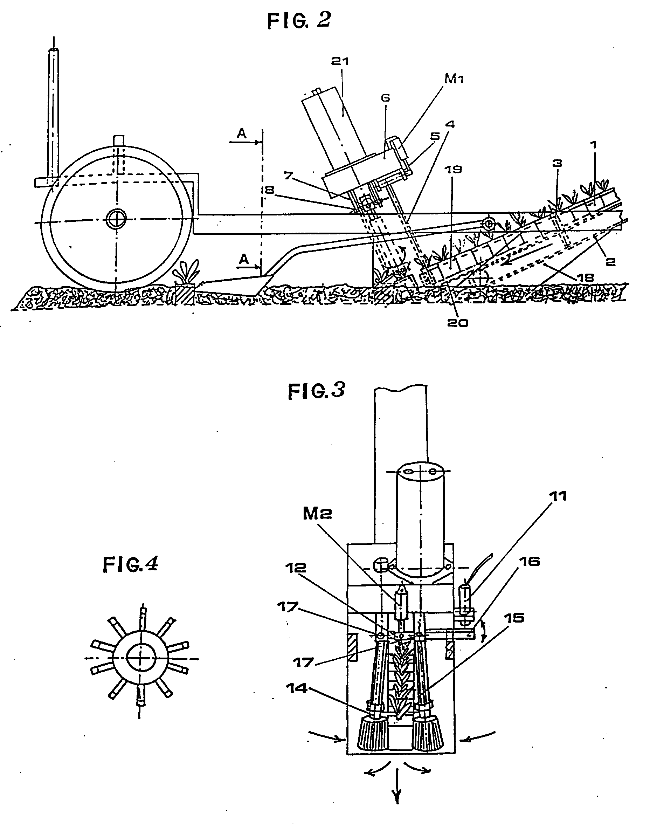

The distributor according to the present invention preferably consists of two fixed walls 1, and two movable walls 19 placed at the end of a belt 2 and overlaying, laterally to said belt, having their fulcrum in 3, as shown in figures 1 and 2, at the upper end of the same on the sides of the belt and hanging downwards. Said walls are controlled through an electrovalve by a pneumatic jack M1 acting onto a system with two mechanical arms 5 opening at 90° angles and counterposed, connected at the lower end thereof to the two movable walls 19 by means of arms 4. Further consist of two vertical rotors 10, having a rotation axis vertical to the sliding plane of the small cubes, said rotors rotating, by means of an oleodynamic motor 21, in a sense concordant towards the centre and opposite to the moving sense of the machine, the motion is discontinuous with intervals that are corresponding to the number of the distributed soil blocks.

The motor operates through a couple of equal gearings, provided inside a box 6, creating two outcoming shafts rotating concordant in the centre. At the lower end of the box, and connected to the inverting gearings, two small shafts are projecting, coupled by two transmission articulations 7 to said two rotors 10, that allow the rotation thereof even allowing a basculation at the lower end of the same. This is made possible due to a couple of hinges 8 and 17, placed at the same distance and parallel to each other, at a distance corresponding to the one existing between the two gearings and therefore to the two rotation axis', while from the lateral view of figure 2 they seem to be parallel to the belt.

By means of a couple of small arms 15, the hinges guide the small shafts 14 to the beginning of the rotors and allow the same the sole transversal basculation, making them remain rigid in longitudinal sense so as to support the push of the sods. The small arms, in turn, are transversally interconnected with an opening of 90°, shown in 12, that unites at the centre, at the height of the hinges, where they come together to one single articulation. Said articulation, connected to a jack M2, maintains the elastic closing of the rotors 10 with a force variable according to the determined pressure. One of the two arms 15 has, beyond the mentioned connection opening, a second one 16 that transfers the motion and controls, by the displacing of the rotor 10, the piloting transducer 11 of the system. The use in this detail of two jacks M1 and M2 is preferreable as it allows, when compared to the mechanical springs that however can be used in this case, to manage the forces so as to make the system appliable to any kind of soil block, be it soft and wet as well as hard and dry, wihout damaging it or creating any disadvantage.

Said rotors 10, provided with longitudinal tongues for assuring a better grasping and traction (Figure 4), are usually closed at a width smaller to the one of the soil block, get open only when the entering soil block performs a pressure from the centre. The already mentioned transducer 11 operates onto said opening, whereby said transducer - by means of an electronic card - directly pilots the valve of the jack M1 operating onto the movable blocking walls 19 of the second soil block; at the same time, said card elaborates the signal and pilots also the stop of the rotors 10.

The whole distributor system is received, at its lower end, by the ploughshare, wide enough. The ploughshare 18 prepares a furrow at the desired and always constant depth, guaranteed by the back consolidation small wheels 9, that make oscillate the transplanting element linked by a hinge to the upper end of the belt; after having placed the sods, the earthing up trowels 13 close the furrow.

Hereinbelow, the functioning of the device according to the present invention will be described more in detail, relating to one preferred embodiment of the row distributor as shown in the mentioned figures 1, 2, 3 and 4.

The device according to the present invention consists of a smooth transporting belt 2 provided at its sides with lateral fixed walls 1 forming, together with said belt, an inclined channel movable backwards with respect to the driving sense, and downwads, carrying the soil blocks resting on their bases with the seedlings turned upwards. It shall be said that the soil blocks are inserted with different methods and systems, and then the row of soil blocks advances inside the rod distributor according to the present invention. It shall be further said that an apposite compressor, moved with cardan shaft and with a different power transmission, provides a sufficient quantity and pressure of air so as to satisfy the whole distributor group, for as many as they are, predetermined and placed on the machine. It shall be said that on said machine an electronic impulse generator is provided, fixed onto the front roll or onto any other wheel according to the applications, and that an apposite decoding card operates, taught by distance data through a keyboard, at choice of the multiples of the emitted impulses, allowing also the quincunx deposition, and that the same controls the distributor. Once the operative phases have been evaluated, at the start of the machine the hydraulic motor, that operates the rotors 10, begins a continuous rotation and the pushing pressure of the jack M2 forces the rotors to remain closed at a minimum distance. The movable walls 19, on the contrary, remain open for allowing the passage of the soil blocks. After the soil block Z1, followed by all other ones, has passed the area of the belt 2 between the movable walls and then, along the chute 20 below, gets into contact with the moving rotors 10 which immediately open under the push of the column and of the belt. Immediately the transducer 11, moved by the arm 16, emits the electronic signal, acting onto the pneumatic electrovalve that immediately blocks the second soil block Z2 by means of the jack M1 and the movable walls 19. The same signal also arrives to the oleodynamic bypass valve, that blocks the motor 21 and then the rotors 10; due to the longer intervention time with respect to the movable walls 19, they get blocked, but the inertial force makes that, after grasping soil block Z2, the rotors perform still an about some ten degrees rotation keeping inside soil block Z1, and this allows to separate the one from the other. When - as can be seen in figure 2 - said separation has been performed, the rotors keep the soil block by the walls awaiting the deposition, while the movable, lever walls 19 keep the column acting onto soil block Z2. When the allowance is given for the deposition by the electronic gear change, the rotors start again placing into the immediately adjacent furrow the soil block Z1. The outcoming of the soil block from the rotors 10 determines the pneumatic closing of the same; the relating impulse of the transducer 11 gives allowance to the jack M1 which, by means of a valve, operates onto the movable walls 19 which open and immediately free said soil block Z2, allowing its entrance between the rotors still moving after the precedent discharge; a new signal is given and a new grasping onto the precedent soil block occurs, with a consequent stop of the rotors 10, in the mentioned manner, so as to obtain a new separation. Once the soil block has been distributed and deposited, it will be earthed up by the trowels 13 and compressed by the end wheels 9.

The following of the cycle determines an auto-phase that manages also the centering for the stop and separation of the soil blocks, which does not occur in already known devices, in which an apposite front mechanical rest for soil block Z1 determines its phase of stop and separation. In fact, should the separation occur in an area different from the predetermined one, due to a malformation of the soil block or similar, the tangential grasping of the rotors on the same would crumble the soil block until the next advances, but without being able to pull the first one inside; and only with the arrival of a new and correct angle the rotors could take a grasp and would start pulling, thus starting the cycle. This allows the machine to avoid expensive stops for the manual re-etablishment of the phase, eliminating that part of the crumbled soil block.

## Claims

1. A row distributor being a modular component of a transplanting machine, that can transport, separate, distribute and plant in the ground, at the desired distance, small plants grown in soil blocks of compressed peaty or synthetic substratum consisting of:
- a feeding belt (2) with fixed lateral walls (1) for containing and guiding soil blocks;
- a system for separating soil blocks, provided with two movable lateral walls (19);
- a ploughshare (18) for cutting a furrow;
- earthing up trowels (13);
- small wheels (9) for resting on the ground and controlling the depositing depth of the soil blocks;
characterized in that said separation system is provided with two rotors (10) transversally and elastically hinged, for laterally grasping soil blocks (Z1) contained between them, and for the separation and deposition of the soil blocks in cooperation with said two movable, lateral walls (19); and a transducer (11) sensitive to the position of the rotors (10), for the piloting of the system in cooperation with an electronic circuit board, said circuit board being adapted to process the signal of said transducer (11) and operate also the stopping of the rotors (10) and the movement of the walls (19).

2. A row distributor according to claim 1, characterized in that said two movable walls (19) are placed laterally at the end of said belt (2), have their fulcrum (3) at their upper end and are hanging downwards, said movable walls (19) being usually open so as to allow the passage of the soil blocks, while in this phase the rotors (10) are closed at the minimum lower distance nearby the soil block, and continuously rotating in concordance towards the centre and in opposite direction to the movable walls (19), and in that said soil block, when entering between the rotors, determines an opening sufficient for allowing the passage and the grasping.

3. A row distributor according to the precedent claims, characterized in that the opening of the rotors (10) controls, by means of a transducer (11) and an apposite management electronic card, the movable walls (19) for blocking the flow of soil blocks at the height of soil block (Z2), as well as the stop of the rotors (10).

4. A row distributor according to claims 1 to 3, characterized in that when the couple of movable walls (19) blocks the soil block (Z2) upon control of the transducer (11), at the opening of the moving rotors (10) caused by the entering soil block (Z1), determines the stop and separation phase, also interrupting the following soil block flow.

5. A row distributor according to claims 1 to 4, characterized in that the rotors (10) receive from the impulse on the movable walls (19) the order to stop, but that they continue their about some ten degrees rotation before stopping, when the movable walls (19) have already fixed the soil block (Z2), determining the separation between the latter one and the precedent soil block.

6. A row distributor according to claims 1 to 5, characterized in that the soil block (Z1), detatched from the precedent ones, remains still between the rotors (10) awaiting the allowance or impulse for discharging, received by the electronic gear-change.

7. A row distributor according to claims 1 to 6, characterized in that once the start has been allowed again, the rotors (10) start again directly and correctly, discharging into the furrow the soil block, and closing immediately after said soil block generating, by means of said transducer (11), a new electronc signal that controls the opening of the movable walls (19), so as to allow the following soil block to enter between he rotors (10).

8. A row distributor according to claims 1 to 7, characterized in that the rotors (10) continue their rotation after having discharged the soil block, closing and opening again for the entrance of the new soil block, when said rotors (10) will interrupt their movement.

9. A row distributor according to claims 1 to 8, characterized in that the movable walls (19) as well as the rotors (10) are controlled with a pushing force operating onto the soil blocks, independently one from the other and variable by means of a pneumatic system consisting of electrovalves and pneumatic jacks M1 and M2.

10. A row distributor according to claims 1 to 9, characterized in that the rotors (10) are, for what concerns the area in contact with the soil blocks, consisting of a plurality of perimetral wings at the same distance, forming at their centre a cavity for the discharge of eventual residual material from the contact with said soil block; said wings allow a better grasping.

## Patentansprüche

1. Reihenverteiler, Modularbestandteil einer zum Umpflanzen vorgehenen Maschine, die in der Lage ist, gekeinmte Planzen in kubischen Schollen aus komprimiertem Substrat aus Torf oder syntetischer Art zu transportieren, von einander zu trennen, zu verteilen und in die Erde einzupflanzen, bestehend aus:
- einem Zubringerband (2) mit festen Seitenwänden (1) um die Schollen zusammenzuhalten und zu führen;
- ener Vorrichtung, um die Schollen voneinander zu trennen, wobei diese Vorrichung mit beweglichen seitenwänden (19) versehen ist;
- einem Pflug (18) um eine Furche zu bilden;
- Nachschubrädern (13);
- Kleinen Rädern (9) zum Abstützen auf dem Grund und zur kontrolle der Ablagetiefe der Schollen;
dadurch gekennzeichnet, dass besagte Trennvorrichtung zwei Läufer (10) enthält, die quer und elastisch angelenkt sind, um seitlich die sich zwischen ihnen befindlichen Schollen (Z1) festzuhalten und zur Trennung und Einsetzung der Schollen in die Erde unter Mitarbeit der zwei besagten, beweglichen, seitlichen wände (19) und einen Wandler (11), der auf die Stellung der Läufer (10) anspricht, zur Fuhrung der Vorrichtung unter Mitarbeit mit einer elektronischen Karte, wobei besagte elektronische Karte dazu geeignet ist, das Signal besagten Wandlers (11) zu bearbeiten und auch das Anhalten der Läufer (10) und die Bewegung der Wände (19) hervorzurufen.

2. Reihenverteiler nach Anspruch 1, dadurch gekennzeichnet, dass die besagten zwei beweglichen Wände (19) seitlich am Ende besagten Bandes (2) vorgesehen sind, und ihren Schwerpunkt (3) in ihrem oberen, äusseren Ende haben und nach unten zeigen, wobei besagte bewegliche Wände (19) normaleweise offen sind um den Durchgang der Schollen zu ermöglichen, wobei in diesem Zustand die Läufer (10) geschlossen sind, und zwar mit dem kleinsten Abstand, der geringer ist als die nächstliegende Scholle, und sich kreisförmig übereinstimmend fortwährend gegen die Mitte und in die, den beweglichen Wänden (19) gegenüberliegende Richtung bewegen; weiterhin gekennzeichnet dadurch, dass besagte Scholle, wenn sie sich zwischen den Läufern befindet, deren Öffnung hervorruft, die gross genug ist, um ihren Durchgang und ihr Festhalten zu erlauben.

3. Reihenverteiler einheitlicher Art nach den vorhergehenden Patentanspruchen, dadurch gekennzeichnet, dass die Öffnung der Läufer (10), mittels Wandler (11) und einer zweckentsprechenden elektronischen Karte, die beweglichen Wände (19) zum Aufhalten der Schollen auf Höhe der Scholle (Z2) und das Anhalten der Läufer (10) hervorruft.

4. Reihenverteiler einheitlicher Art nach den Ansprüchen 1 bis 3, dadurch gekennzeichnet, dass das Paar beweglicher Wände (19) die Scholle (Z2) auf Befehl des Wandlers (11) an der Öffnung blockiert, wobei die Öffnung durch die eintretende Scholle (Z1) hervogerufen wird, der sich bewegenden Läufer (10) damit die Fase des Stillstandes und der Trennung hervorruft, wobei auch der Nachschub der Schollen unterbrochen wird.

5. Reihenverteiler einheitlicher Art nach den Ansprüchen 1 bis 4, dadurch gekennzeichnet, dass die Läufer (10) von dem gleichen Impuls auf die beweglichen Wände (19) den Befehl zum Anhalten erhalten, aber dass sie für wenige zehntel Grade ihre Umdrehung fortsetzen und dann stehen bleiben, wenn die beweglichen Wände (19) die Scholle (Z2) in die Erde eingesetzt und dadurch die Trennung von der vorhergehenden Scholle hervorgerufen haben.

6. Reihenverteiler einheitlicher Art nach den Ansprüchen 1 bis 5, dadurch gekennzeichnet, dass die von den vorhergehenden getrennte Scholle (Z1) zwischen den Läufern haften bleibt, bis sie die Entblockung und die Entlastung, die ihr durch die elektronische Karte erteilt wird, erhält.

7. Reihenverteiler einheitlicher Art nach den Anspruchen 1 bis 6, dadurch gekennzeichnet dass, sobald der Anlaufbefehl erteilt wird, sich die Läufer (10) in Bewegung setzen, wobei sie die Scholle direkt und genau in die Furch einsetzen und sich sofort danach schliessen und dabei mittels des Wandlers (11) ein neues elektronisches Kommando zur Öffnung der beweglichen Wände (19) hervorrufen um dadurch einer neuen Scholle den Eintritt zwischen die Läufer (10) zu ermöglichen.

8. Reihenverteiler einheitlicher Art nach den Anspruchen 1 bis 7, dadurch gekennzeichnet, dass die Läufer (10) nach der Abgabe der Scholle ihre Umdrehung fortsetzen, wobei sie sich von Neuem beim Eintritt der neuen Scholle schliessen und öffnen wenn besagte Läufer (10) ihre Bewegung unterbrechen werden.

9. Reihenverteiler einheitlicher Art nach den Anspruchen 1 bis 8, dadurch gekennzeichnet, dass sowohl die beweglichen Wände (19) als auch die Läufer (10) durch eine Schubkreft angetrieben werden, die auf die Schollen, unabhängig voneinander, und verschiedenartig mittels eines pneumatischen Systeme einwirkt, welches aus Elektroventilen und pneumatischen Jacks M1 und M2 besteht.

10. Reihenverteiler einheitlicher Art nach den Anspruchen 1 bis 9, dadurch gekennzeichnet, dass die Läufer (10) im Kontaktbereich mit den Schollen aus vielen perimetralen Rippen, die in gleichbleibendem Abständen angeordnet sind, bestehen, um ein besseres Festhalten zu gewährleisten wobei sie in der Mitte einen Hohlraum bilden, der dazu geeignet ist, das Abstossen eventuellen rückstandigen Materials, durch den Kontakt mit der Scholle bedingt, hervorzurufen.

## Revendications

1. Distributeur à rangée composant modulaire d'une machine répiqueuse, capable de transporter, séparer, distribuer et planter dans le terrain à une distance volue, des petites plantes bourgeonnées, dans des mottes cubiques de substrat comprimè de tourbe ou synthètique, qui comprenne:
- un ruban alimentateur (2) avec des cloisons latérales fixes (1) pour conténir et diriger les mottes;
- un système pour séparer les mottes, pourvu de deux cloisons latérales mobiles (19);
- un soc (18) pour ouvrir un sillon;
- des roues de soutien (13);
- des petites roues (9) de soutien au terrain et de controle de la profondité de déposition des mottes;
caractérisé en ce que dit système de séparation comprenne deux rotors (10) centrès transversalement et élastiquement pour serrer latéralement les mottes (21) qui se trouvent entre dits rotors, et pour la séparation et la déposition des mottes en coopération avec les deux dites cloisons laterales mobiles (19), et un transducteur (11) sensible à la position des rotors (10) pour la gestion du système en coopération avec une fiche élettronique qui est apte à traiter le signal de dit transducteur (11) et à provoquer aussi l'arrête des rotors (10) et le mouvement des cloisons (19).

2. Distributer à rangée selon la revendications 1, caractérisé en ce que dites deux cloisons mobiles (19) sont disposées latèralement à l'extrémité de dit ruban (2) avec le point d'appui (3) dans leur extrémité supérieure et le penchent vers le bas, dites cloisons mobiles (19) étant normalement ouvertes de façon à permettre le passage des mottes, pendant que, dans cette fase les rotors (10) sont fermes à la plus petite distance inférieure rèlativement à la motte la plus voisine et tournent en continuation concordant en direction du centre et dans la direction opposée aux cloisons mobiles (19) et du fait que dite motte, quand elle se trouve entre les rotors, provoque une ouverture suffisante pour permettre son passage et sa prise de dite motte.

3. Distributeur à rangèe unitaire selon les revendications précédentes caractérisé en ce que l'ouverture des rotors (10) commande, au moyen d'un transducteur (11) et d'une fiche appropriée de gestion, les paroies mobiles (19) de bloccage du flux des mottes au niveau de la motte (Z2) et l'arrête des rotors (10).

4. Distributeur à rangée selon les revendications 1 à 3, caractérisé en ce que la couple des paroies mobiles (19) arrête la motte (Z2) au moyen du commande du trasducteur (11), à l'ouverture, déterminée par la motte (Z1) qui entre, des rotors (10) en mouvement et détermine la fase d'arrête et de séparation, de façon à interrompre aussi le flux suivant de mottes.

5. Distributeur à rangée unitaire selon les revendications 1 à 4, caractérisé en ce que les rotors (10) prennent, de la même impulsion sur les paroies mobiles (19), le commande d'arrête, mais qu'ils continuent pour peu de dizaine de dègrés la rotation pour s'arrêter quand desormais les paroies mobiles (19) ont fixées la motte (Z2) en déterminant la séparation de la précédente motte.

6. Distributeur à rangée unitaire selon les revendications 1 à 5, caractérisé en ce que la motte (Z1) séparée des précédentes mottes, s'arrête au milieu des rotors (10) en attendent l'autorisation ou l'impulsion au déchargement, transmis par le changement de vitesses électronique.

7. Distributeur à rangée unitaire selon les revendications 1 à 5, caractérisé en ce que, une fois autorisé le départ, les rotors (10) repartent, déchargant directement et correctement dans le sillon la motte en se refermant immediatement après, et en générant, au moyen du transducteur (11) un nouveau signal électronique qui commande l'ouverture des paroies mobiles (19) de façon à consentir a une nouvelle motte l'entrée entre les rotors (10).

8. Distributeur à rangée unitaire selon les revendications 1 à 7, caractérisé de ce que les rotors (10) continuent à tourner après avoir déposé la motte en se fermant et en s'ouvrant de nouveau a l'entré d'une nouvelle motte, quand dits rotors (10) interromperont le mouvement.

9. Distributeur à rangée unitaire selon les revendications 1 à 8, caractérisé de ce que soit les paroies mobiles (19), soit les rotors (10) sont gérés avec force de poussé qu'agit sur les mottes independamment l'un de l'autre et variable au moyen d'un système pneumatique qui consiste d'électrosoupapes et jacks pneumatiques M1 et M2.

10. Distributeur à rangée unitaire selon les revendications 1 à 9, caractérisé de ce que les rotors (10) sont, dans la zone de contact avec les mottes, formèe de plusieures petites ailettes périmetrales équidistantes pour permettre un saisissement meilleur et qui forment au centre une cavité apte au déchargement du résidu eventuel du matériel dù au contact avec la motte.
